# EUROPÄISCHE PATENTSCHRIFT

(11) **EP 1 285 849 B1**
(45) Veröffentlichungstag und Bekanntmachung des Hinweises auf die Patenterteilung: **02.03.2005**
(21) Anmeldenummer: 02014754.2
(22) Anmeldetag: 04.07.2002
(51) Int. Cl.: B62J 33/00, B62D 1/06, B62K 11/14, B62K 21/26, B62K 23/04

(54) **Zweiradgriff mit Griffheizung**
Grip with heating element
Poignée avec élément de chauffage

(30) Priorität: 22.08.2001 DE 10141049
(43) Veröffentlichungstag der Anmeldung: 26.02.2003
(73) Patentinhaber: Bayerische Motoren Werke Aktiengesellschaft, 80809 München (DE)
(72) Erfinder: Dzurnak, Stanislav, 85764 Oberschleissheim (DE)

(56) Entgegenhaltungen:
- DE-A- 2 951 871
- DE-A- 3 344 582
- DE-A- 19 526 029
- DE-U- 20 016 633
- US-A- 1 429 799
- US-A- 4 547 655

## Beschreibung

Die vorliegende Erfindung betrifft einen Zweiradgriff gemäß dem Oberbegriff des Patentanspruchs 1.

Aus der DE 200 16 633 U1 ist ein beheizbarer, drehbarer Motorradgasgriff bekannt, bei dem in den Griff eine Widerstandsfolie integriert ist, die über elektrische Leiter mit Strom versorgt wird. Um bei einem drehbaren Gasgriff das Risiko eines Bruches der elektrischen Leitungen zu verringern sind dort die Leiterenden um das Lenkerrohr herum angeordnet und frei in eine ausgenutete umlaufende Führung eingesetzt, die im Lenkerrohr vorgesehen ist. Die Leiterenden treten aus einem Schutzrohr aus, dessen Ende in eine Seitennut des Lenkergriffs eingesetzt ist.

Beheizbare Motorradgriffe sind ferner aus der DE 195 25 748 C2 und DE 195 26 029 C2 bekannt. In diesen Druckschriften wird jedoch nicht näher auf die Problematik der mechanischen Belastung der elektrischen Anschlussleitungen eines drehbaren Griffs eingegangen.

Durch die Drehbewegungen des Gasgriffs sind die Anschlussleitungen mechanischen Beanspruchungen ausgesetzt, was häufig zu Beschädigungen und zum Ausfall der Griffheizung führt. Bei der Montage muss das elektrische Versorgungskabel der Griffheizung durch das Lenkerrohr hindurchgefädelt werden, was schwierig und vor allem "prozessunsicher" ist. Hierbei können bereits leichte Beschädigungen entstehen, wodurch ein Ausfall der Griffheizung vorprogrammiert ist. Häufig kommt es dabei zum Abknicken und zu einer axialen Verdrehung des Anschlusskabels.

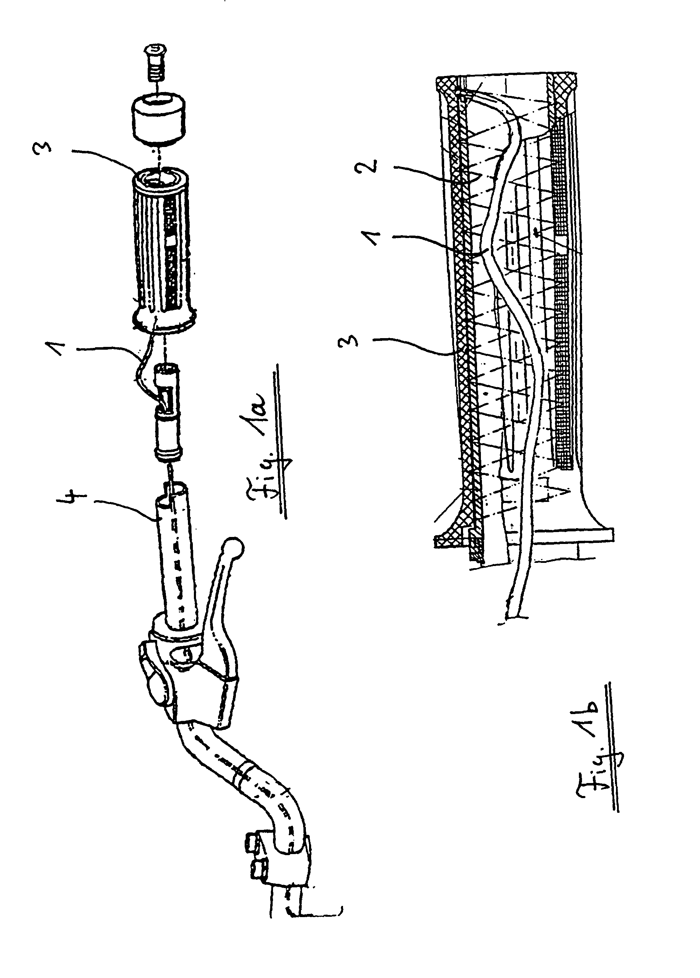

Aus anmelderinternem Stand der Technik ist bekannt, ein elektrisches Anschlusskabel 1 für ein Heizelement 2 eines Gasdrehgriffs 3 durch das Lenkerrohr 4 hindurchzufädeln, was in den Figuren 1a und 1b angedeutet ist.

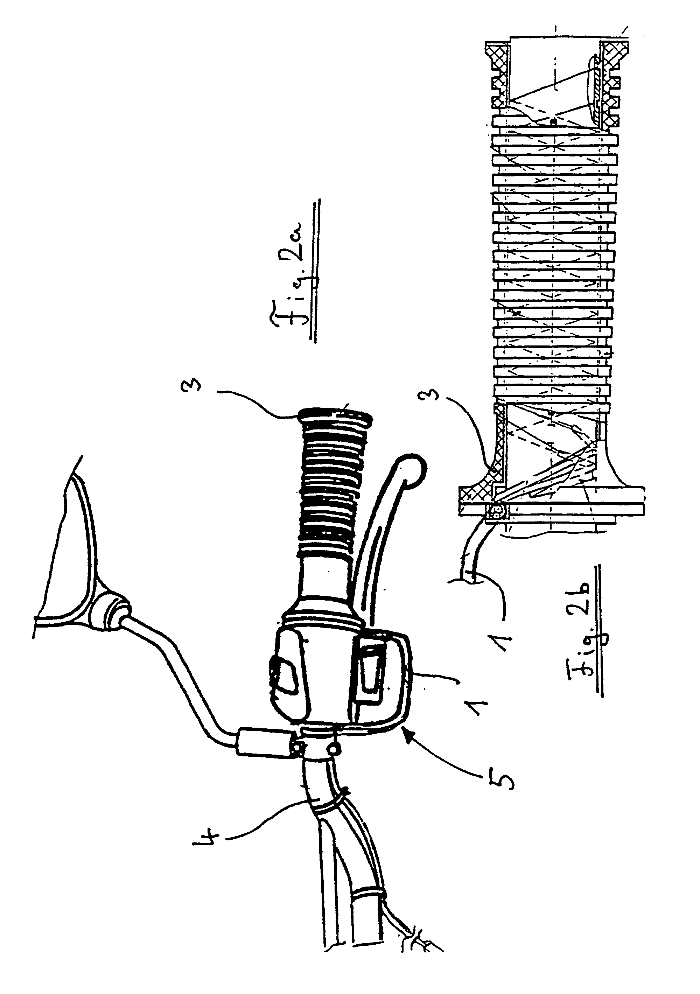

Aus anmeldeinternem Stand der Technik ist ferner eine den Figuren 2a und 2b dargestellte Variante bekannt, bei der das elektrische Anschlusskabel 1 des Heizelements 2 aus der Ummantelung des Griffs 3 herausgeführt ist und in Form einer "Dehnungsschleife" 5 entlang des Lenkerrohres 4 verlegt ist.

Bei beiden o.g. Varianten ist die Lebensdauer der Griffheizung bzw. ihrer Anschlussleitungen nicht zufriedenstellend.

Aufgabe der Erfindung ist es, bei einem drehbaren mit Strom versorgten Zweiradgriff die durch das Drehen entstehenden mechanischen Belastungen der elektrischen Stromversorgung zu verringern und die Lebensdauer zu erhöhen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem Zweirad- bzw. Motorradgriff, bei dem das "Leitungselement" zur elektrischen Stromversorgung die Form einer Spirale mit mehreren Windungen hat. Konkreter ausgedrückt ist bei dem Motorradgriff mit einem elektrischen Heizelement die Versorgungsleitung des Heizelementes im Bereich des Motorradgriffs spiralförmig angeordnet bzw. gewickelt. Die Windungsachse der Versorgungsleitung ist im wesentlichen parallel zur Längsachse des Motorradgriffs. Bei einer Drehung des Motorradgriffs kann sich die Versorgungsleitung ähnlich wie eine Drehfeder in Dreh- bzw. Umfangsrichtung verformen, was mit einer nur sehr geringen mechanischen Belastung des Leitungselementes verbunden ist.

Vorzugsweise liegen die Spiralwindungen der Versorgungsleitung in einer Ebene, was eine sehr kompakte Bauweise ermöglicht. Am äußeren Ende der "Versorgungsleitungsspirale" kann das elektrische Heizelement des Motorradgriffs angeschlossen sein. Das innere Ende der Versorgungsleitungsspirale kann einstückig aus dem Griff herausgeführt sein. Alternativ dazu kann an das innere Ende der Versorgungsleitungsspirale eine separate Zuleitung angeschlossen bzw. angelötet sein. Die Zuleitung kann gegebenenfalls über eine zusätzliche Steckverbindung mit der Stromversorgung des Motorrads verbunden sein. Vorzugsweise ist die Zuleitung im Inneren des Lenkerrohres, das heißt von außen nicht sichtbar angeordnet. Das spiralförmige Leitungselement kann beispielsweise durch zwei flexible einzelne Leitungen gebildet sein. Alternativ dazu kann das Leitungselement auch durch eine flexible Leiterbahnfolie gebildet sein.

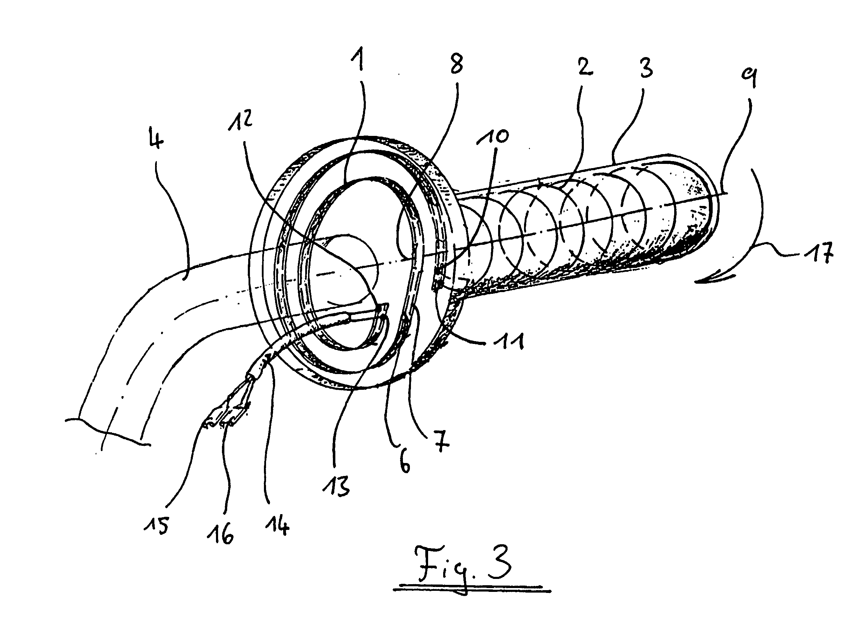

Im folgenden wird die Erfindung anhand eines Ausführungsbeispiels im Zusammenhang mit der Figur 3 näher erläutert.

Figur 3 zeigt ein Leitungselement 1 einer Heizeinrichtung 2, die in einen drehbaren Motorradgasgriff 3 integriert ist. Der Gasgriff 3 ist am freien Ende eines Lenkerrohres 4 angeordnet.

Das Leitungselement 1 ist hier eine flexible Leiterbahnfolie auf der zwei Einzelleitungen 6, 7 vorgesehen sind. Das Leitungselement 1 hat die Form einer Spirale, wobei die einzelnen Spiralwindungen hier in einer Ebene liegen. Die Spirale ist so angeordnet, dass ihre Windungsachse 8 im wesentlichen parallel zu einer Längsachse 9 des Griffs 3 ist.

An einem äußeren Ende des Leitungselements 1 sind zwei Anschlüsse 10, 11 vorgesehen, an die das Heizelement 2 angeschlossen ist. An einem inneren Ende des Leitungselements 1 sind zwei weitere Anschlüsse 12, 13 vorgesehen, an die ein Zuleitungskabel 14 angeschlossen ist, an dessem Ende zwei den Leitungen 6, 7 zugeordnete Steckerelemente 15, 16 vorgesehen sind.

Beim Drehen des Gasgriffs 3, was durch einen Pfeil 17 angedeutet ist, kann sich das Leitungselement 1 ungehindert verformen bzw. verwinden. Die mechanischen Belastungen des Leitungselements 1 bzw. der Anschlüsse 10 - 13 sind hierbei relativ gering, wodurch sich eine hohe Lebensdauer ergibt.

## Patentansprüche

1. Griffstück, das drehbar an einem Ende eines Lenkerrohres angeordnet werden kann, wobei das Griffstück ein elektrisches Heizelement aufweist, das über ein elektrisches Leitungselement mit Strom versorgt wird, **dadurch gekennzeichnet, dass** das Leitungselement (1), im Bereich des Griffstücks (3) die Form einer Spirale mit mehreren Windungen hat.

2. Griffstück nach Anspruch 1, **dadurch gekennzeichnet, dass** die Windungsachse (8) der Spirale im wesentlichen parallel zu einer Längsachse (9) des Griffstücks ist.

3. Griffstück nach Anspruch 1 oder 2, **dadurch gekennzeichnet, dass** die Windungen der Spirale in einer Ebene liegen.

4. Griffstück nach einem der Ansprüche 1 bis 3, **dadurch gekennzeichnet, dass** das Leitungselement (1) ein äußeres Ende (10, 11) und ein inneres Ende (12, 13) aufweist, wobei das Heizelement (2) an das äußere Ende (10, 11) angeschlossen ist.

5. Griffstück nach Anspruch 4, **dadurch gekennzeichnet, dass** an das innere Ende (12, 13) eine Zuleitung (14) angeschlossen ist.

6. Griffstück nach Anspruch 5, **dadurch gekennzeichnet, dass** die Zuleitung 14 im Inneren des Lenkerrohres (4) angeordnet werden kann.

7. Griffstück nach einem der Ansprüche 1 bis 6, **dadurch gekennzeichnet, dass** das Leitungselement (1) durch zwei flexible Leitungen (6, 7) gebildet ist.

8. Griffstück nach einem der Ansprüche 1 bist 6, **dadurch gekennzeichnet,** dass das Leitungselement (1) durch eine flexible Leiterbahnfolie gebildet ist, auf der zwei separate Leitungen (6, 7) vorgesehen sind.

## Claims

1. A handle rotatably mountable on one end of a handlebar, the handle comprising an electric heating element supplied by an electric conductor element, **characterised in that** in the neighbourhood of the handle (3) the conductor element (1) is in the form of a spiral with a number of turns.

2. A handle according to claim 1, **characterised in that** the axis (8) of the spiral is substantially parallel with a longitudinal axis (9) of the handle.

3. A handle according to claim 1 or 2, **characterised in that** the turns of the spiral lie in a plane.

4. A handle according to any of claims 1 to 3, **characterised in that** the conductor element (1) has an outer end (10, 11) and an inner end (12, 13), wherein the heating element (2) is connected to the outer end (10, 11).

5. A handle according to claim 4, **characterised in that** a feed wire (14) is connected to the inner end (12, 13).

6. A handle according to claim 5, **characterised in that** the feed wire (14) can be disposed inside the handlebar (4).

7. A handle according to any of claims 1 to 6, **characterised in that** the conductor element (1) is in the form of two flexible conductors (6, 7).

8. A handle according to any of claims 1 to 6, **characterised in that** the conductor element (1) is a flexible strip conductor foil on which two separate conductors (6, 7) are provided.

## Revendications

1. Poignée montée en rotation à l'extrémité d'un tube de guidon, et qui présente un élément électrique chauffant alimenté en courant par un élément conducteur,
**caractérisée en ce que**
l'élément conducteur (1), dans la zone de la poignée (3), a la forme d'une spirale comportant plusieurs spires.

2. Poignée selon la revendication 1,
**caractérisée en ce que**
l'axe d'enroulement (8) de la spirale est essentiellement parallèle à l'axe longitudinal (9) de la poignée.

3. Poignée selon la revendication 1 ou 2,
**caractérisée en ce que**
les spires de la spirale sont dans un plan.

4. Poignée selon une des revendications 1 à 3,
**caractérisée en ce que**
l'élément conducteur (1) présente une extrémité externe (10, 11) et une extrémité interne (12, 13), l'élément chauffant (2) étant relié à l'extrémité externe (10, 11).

5. Poignée selon la revendication 4,
**caractérisée en ce que**
un conducteur (14) est relié à l'extrémité interne (12, 13).

6. Poignée selon la revendication 5,
**caractérisée en ce que**
le conducteur (14) peut être monté à l'intérieur du tube de guidon (4).

7. Poignée selon une des revendications 1 à 6,
**caractérisée en ce que**
l'élément conducteur (1) est constitué par deux conducteurs flexibles (6, 7).

8. Poignée selon une des revendications 1 à 6,
**caractérisée en ce que**
l'élément conducteur (1) est constitué par une piste pelliculaire flexible sur laquelle sont prévus deux conducteurs séparés (6, 7).
